# EUROPEAN PATENT APPLICATION

(11) **EP 4 810 811 A1**
(43) Date of publication of application: **23.09.2026**
(21) Application number: 26159263.8
(22) Date of filing: 18.02.2026
(51) Int. Cl.: F16C 17/04, F16C 33/20

(54) **THRUST BEARING FOR ROTATING SHAFT OF VEHICLE DRIVING MOTOR**

(30) Priority: 19.03.2025 JP 2025045350
(71) Applicant: Daido Metal Company Ltd., Nagoya (JP)
(72) Inventor: TAKEDA, Kohei, Inuyama-shi, Aichi (JP); MAITANI, Shinya, Inuyama-shi, Aichi (JP)
(74) Representative: Kraus & Lederer PartGmbB

(57) **Abstract**

Provided is a thrust bearing with which a rotating shaft and a sliding surface are not easily damaged by an electric discharge. A thrust bearing (10) receives force acting in an axial direction (X) of a rotating shaft (6) of a vehicle driving motor. The thrust bearing (10) includes: a metal base (20) having an annular shape and an insulating layer (30). The metal base (20) includes a first axial-directional end surface (21), a second axial-directional end surface (22), and two radial-directional end surfaces (23). The insulating layer (30) covers at least the first axial-directional end surface (21) and the two radial-directional end surfaces (23) of the metal base (20). The metal base (20) is constituted by a back metal layer (25) and a bearing alloy layer (26) positioned closer to the first axial-directional end surface (21) than the back metal layer (25) is. A maximum thickness of the insulating layer (30) covering the radial-directional end surfaces (23) of the metal base (20) is larger than 0% and is equal to or smaller than 50% of a minimum thickness of the insulating layer (30) covering the first axial-directional end surface (21) of the metal base (20).

## Description

### BACKGROUND OF THE INVENTION

### (1) FIELD OF THE INVENTION

The present disclosure is related to a thrust bearing for receiving force acting in an axial direction of a rotating shaft of a vehicle driving motor.

### (2) DESCRIPTION OF RELATED ART

A bearing is used for a rotating shaft of a motor, and the like. For example, the motor is used for driving a vehicle. The motor includes a case, a stator that includes a coil, a rotor that includes a magnet, a rotating shaft that is connected to the rotor, and a bearing that is provided in the case so as to support the rotating shaft and that is disposed in a bearing holding hole. In the case, with respect to the rotating shaft, the stator is disposed on the outer side and the rotor is disposed on the inner side. When the coil of the stator is energized, the coil generates a magnetic field. The rotor is rotated by an interaction between the magnetic field generated by the coil and a magnetic field generated by the magnet of the rotor. The rotation of the rotor rotates the rotating shaft. From the rotating shaft, dynamic power of the rotation is output to the exterior.

A motor equipped in an electric vehicle is driven by an inverter method, as described in JP-A-2022-146253, for example. In the inverter method, the motor is able to change the rotation speed of the rotating shaft, by changing the frequency of an electric power source that energizes the coil.

As for the motor that is used for the driving of a vehicle, it is desirable to enhance efficiency by increasing the frequency of the electric power source. However, when the frequency of the electric power source is increased, the rotating shaft is easily charged with electricity. As a result, a large electric potential difference may occur between the rotating shaft and the case, between which the bearing is interposed. When the bearing is a rolling bearing, a discharge due to the electric potential difference can occur in lubricant between a bearing ring and a rolling element in the rolling bearing. The discharge can damage the bearing ring and the rolling element. As means for preventing the damage of the bearing ring and the rolling element, International Publication No. WO2022/249723 describes that an insulating film is adopted as a fitting surface through which the bearing ring is fitted to the rotating shaft and the case.

To reduce noise from the rotation of the rotating shaft, an alteration of the bearing by replacing the rolling bearing with a slide bearing has been considered. When the bearing is a slide bearing in an internal combustion engine that is used for the driving of a vehicle, an electric potential difference may occur between the rotating shaft and the slide bearing, due to a leakage current from an ignition system of the internal combustion engine or an electric apparatus, static electricity from friction between the rotating shaft and a sliding surface of the slide bearing, or the like. As a result, a discharge may occur. The discharge can damage the rotating shaft and the sliding surface of the slide bearing. As means for preventing the damage of the rotating shaft and the sliding surface of the slide bearing, JP-A-2009-92156 describes that a resin layer having an insulation property is adopted as the sliding surface of the bearing. The resin layer has the insulation property, by containing 10 to 40 volume% carbon-based particles whose average particle diameter is 15 to 45% of the film thickness of the resin layer. In JP-A-2009-92156, before the electric potential difference between the resin layer and the rotating shaft becomes large, such a faint discharge that the rotating shaft and the sliding surface of the slide bearing are not damaged is actively caused between carbon-based particles exposed on the sliding surface and the surface of the rotating shaft, and thereby, the damage of the rotating shaft and the sliding surface of the slide bearing is avoided.

### BRIEF SUMMARY OF THE INVENTION

For rotating shafts, other than a radial bearing such as a slide bearing, a thrust bearing may be used. Thrust bearings are configured to receive force acting in an axial direction of the rotating shaft. Similarly to the slide bearing described above, an electric potential difference may occur also between the rotating shaft and the thrust bearing, which may cause a discharge. The discharge can damage the rotating shaft and the sliding surface of the thrust bearing.

When a thrust bearing is employed for a motor used for the driving of a vehicle, the electric potential difference between the rotating shaft and a case tends to be larger than the electric potential difference between the rotating shaft and the slide bearing which occurs in the internal combustion engine due to the above-described cause. Even when a technique similar to that of the slide bearing described in JP-A-2009-92156 is applied to a thrust bearing employed for a motor used for the driving of a vehicle, damage may still occur where, for example, when the resin around the carbon-based particles melts. Thus, it is not possible to sufficiently avoid the damage of the rotating shaft and the sliding surface of the thrust bearing.

An object of the present disclosure is to provide a thrust bearing with which a rotating shaft and a sliding surface are not easily damaged by a discharge.

A thrust bearing of the present disclosure is for receiving force acting in an axial direction of a rotating shaft of a vehicle driving motor. The thrust bearing includes:
a metal base having an annular shape and including a first axial-directional end surface, a second axial-directional end surface, and two radial-directional end surfaces; and
an insulating layer covering at least the first axial-directional end surface and the two radial-directional end surfaces of the metal base.

The metal base is constituted by a back metal layer and a bearing alloy layer positioned closer to the first axial-directional end surface than the back metal layer is.

A maximum thickness of the insulating layer covering the radial-directional end surfaces of the metal base is larger than 0% and is equal to or smaller than 50% of a minimum thickness of the insulating layer covering the first axial-directional end surface of the metal base.

### BRIEF DESCRIPTION OF THE SEVERAL VIEWS OF THE DRAWING

Fig. 1 is a cross-sectional view schematically showing a motor according to an embodiment in the present disclosure, taken along an axial direction;
Fig. 2 is a front view of a thrust bearing as observed from a direction faced by a thrust surface of a rotating shaft;
Fig. 3 is a front view of the thrust bearing as observed from the direction opposite to the direction faced by the thrust surface of the rotating shaft;
Fig. 4 is a cross-sectional view of the thrust bearing taken along line A-A in Fig. 2;
Fig. 5 is a cross-sectional view for explaining a discharge toward a thrust bearing in a comparison example;
Fig. 6 is a cross-sectional view for explaining a discharge toward a thrust bearing in an embodiment and is a diagram corresponding to Fig. 5;
Fig. 7 is a front view of a thrust bearing according to a modification, as observed from the direction opposite to the direction faced by the thrust surface of the rotating shaft;
Fig. 8 is a cross-sectional view of a thrust bearing according to another modification and is a diagram corresponding to Fig. 4;
Fig. 9 is a cross-sectional view of a thrust bearing according to yet another modification and is a diagram corresponding to Fig. 4;
Fig. 10 is a cross-sectional view of a thrust bearing according to yet another modification and is a diagram corresponding to Fig. 4;
Fig. 11 is a cross-sectional view of a thrust bearing according to yet another modification and is a diagram corresponding to Fig. 4; and
Fig. 12 is a cross-sectional view of a thrust bearing according to yet another modification and is a diagram corresponding to Fig. 4.

### DETAILED DESCRIPTION OF THE INVENTION

An embodiment and modifications thereof in the present disclosure relate to the following [1] to [4].
[1] A thrust bearing for receiving force acting in an axial direction of a rotating shaft of a vehicle driving motor, the thrust bearing including:
   a metal base having an annular shape and including a first axial-directional end surface, a second axial-directional end surface, and two radial-directional end surfaces; and
   an insulating layer covering at least the first axial-directional end surface and the two radial-directional end surfaces of the metal base, wherein
   the metal base is constituted by a back metal layer and a bearing alloy layer positioned closer to the first axial-directional end surface than the back metal layer is, and
   a maximum thickness of the insulating layer covering the radial-directional end surfaces of the metal base is larger than 0% and is equal to or smaller than 50% of a minimum thickness of the insulating layer covering the first axial-directional end surface of the metal base.
[2] The thrust bearing according to [1] wherein the metal base includes two partial metal bases each having a semi-annular shape.
[3] The thrust bearing according to [1] or [2] wherein a thickness of the insulating layer covering at least one of the two radial-directional end surfaces of the metal base decreases from the first axial-directional end surface toward the second axial-directional end surface of the metal base.
[4] The thrust bearing according to any one of [1] to [3], wherein
   at least one of the two radial-directional end surfaces include an inclined surface that is inclined with respect to a radial direction of the annular shape or a curved surface that curves with respect to the radial direction of the annular shape, and
   the inclined surface and/or the curved surface of the radial-directional end surfaces is connected to the first axial-directional end surface.

An embodiment and modifications thereof in the present disclosure will be described below with reference to the drawings. In the drawings attached to the present specification, for convenience of ease of illustration and understanding, scales and dimensional ratios of vertical and horizontal sizes, and the like are altered and exaggerated from those of an actual object, when appropriate. Constituents and the like shown in some figures are occasionally omitted in other figures.

In the present specification, terms specifying shapes, geometric conditions, and degrees of them, as exemplified by "parallel", "orthogonal", and "identical", values of lengths and angles, and the like are not limited to strict meanings, and are interpreted as including ranges in which the same functions can be expected.

In the present specification, when multiple upper limit value candidates and multiple lower limit value candidates are presented regarding a parameter, a numerical range of the parameter may be a combination of an arbitrary one of the upper limit value candidates and an arbitrary one of the lower limit value candidates.

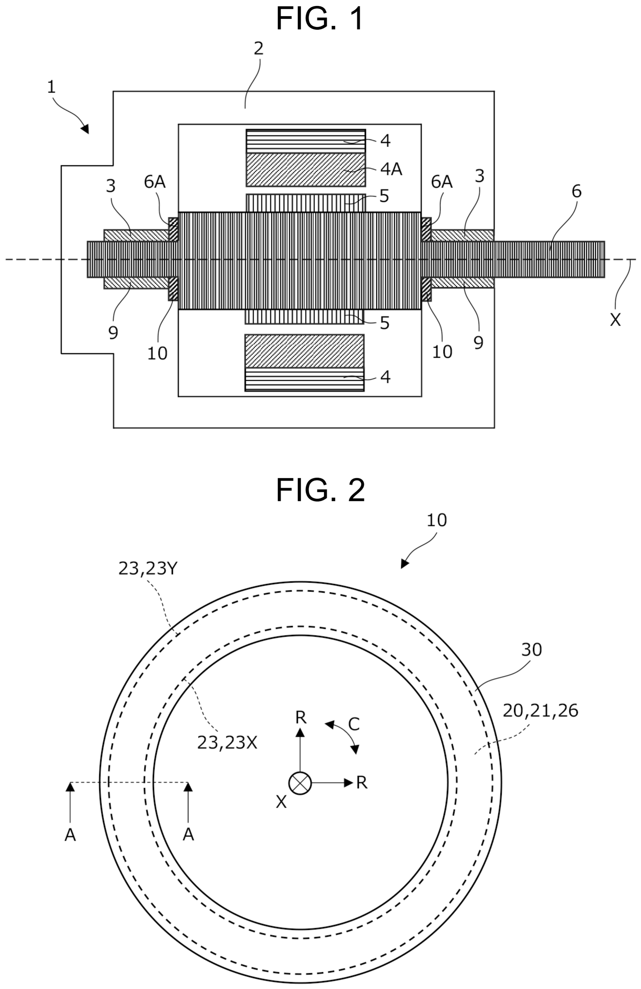

Fig. 1 is a schematical cross-sectional view of a motor 1 according to an embodiment in the present disclosure. For example, the motor 1 is used for driving a vehicle. For example, the vehicle is an electric vehicle. The motor 1 outputs rotation to the exterior. As shown in Fig. 1, the motor 1 includes a case 2, a stator 4, a rotor 5, a rotating shaft 6, radial bearings 9, and thrust bearings 10. The radial bearings 9 and the thrust bearings 10 may be provided, as shown in the drawing, on two sides of the rotating shaft 6 opposing each other while having the rotor 5 interposed therebetween, or may be provided only on one side.

The case 2 houses other members of the motor 1. The case 2 is provided with bearing holding holes 3 into which the radial bearings 9 are pressed. Each of the bearing holding holes 3 is a hole having a circular columnar shape so that the radial bearings 9 can appropriately be pressed therein. The bearing holding holes 3 may further hold the thrust bearings 10 in addition to the radial bearings 9. In that situation, the bearing holding holes 3 may each have a multi-stepped circular columnar shape obtained by coaxially connecting together a plurality of circular columns having mutually different sizes. The radial bearings 9 and the thrust bearings 10 may be held by mutually different bearing holding holes 3.

The stator 4 and the rotor 5 generate dynamic power of the motor 1. The stator 4 is more distant from the rotating shaft 6 than the rotor 5 is. The stator 4 includes a coil 4A. The coil 4A is connected to an unillustrated electric power source. The rotor 5 is connected to the rotating shaft 6. The rotor 5 includes a magnet.

The rotating shaft 6 transmits the rotation of the motor 1 to the exterior. The rotating shaft 6 extends in an axial direction X, and rotates around the axial direction X. The rotating shaft 6 protrudes to the exterior of the case 2. In the example shown in Fig. 1, the rotating shaft 6 has a multi-stepped circular columnar shape obtained by coaxially connecting together a plurality of circular columns having mutually different sizes. Inside the case 2, the rotating shaft 6 has a larger diameter than the inside diameter of the bearing holding holes 3 in the case 2. In the example shown in the drawing, each of the sections at which the diameter of the rotating shaft 6 changes, i.e., each of the sections at which the circular columns are connected together is a thrust surface 6A that is in contact with the thrust bearing 10. The rotating shaft 6 may be connected to an unillustrated speed reducer that amplifies rotating torque.

When the coil 4A is energized by the electric power source, the coil 4A generates a magnetic field. The rotor 5 is rotated by an interaction between the magnetic field generated by the coil 4A and a magnetic field generated by the magnet of the rotor 5. The rotation of the rotor 5 rotates the rotating shaft 6 connected to the rotor 5. In this way, the motor 1 outputs the rotation of the rotating shaft 6 to the exterior as the dynamic power.

The radial bearings 9 bear and support the rotating shaft 6 in an appropriate position in a direction orthogonal to the axial direction X. Due to the presence of the radial bearings 9, the rotating shaft 6 rotates in the appropriate position in the direction orthogonal to the axial direction X. As a result, loss of the dynamic power of the rotation of the rotating shaft 6 is restrained. The radial bearings 9 may be slide bearings.

The thrust bearings 10 in the present embodiment will be described. The thrust bearings 10 receive force acting in the axial direction X of the rotating shaft 6. The thrust bearings 10 are in contact with the rotating shaft 6 on the thrust surfaces 6A. Due to the presence of the thrust bearings 10, the rotating shaft 6 rotates in an appropriate position in the axial direction X. As a result, loss of the dynamic power of the rotation of the rotating shaft 6 is restrained.

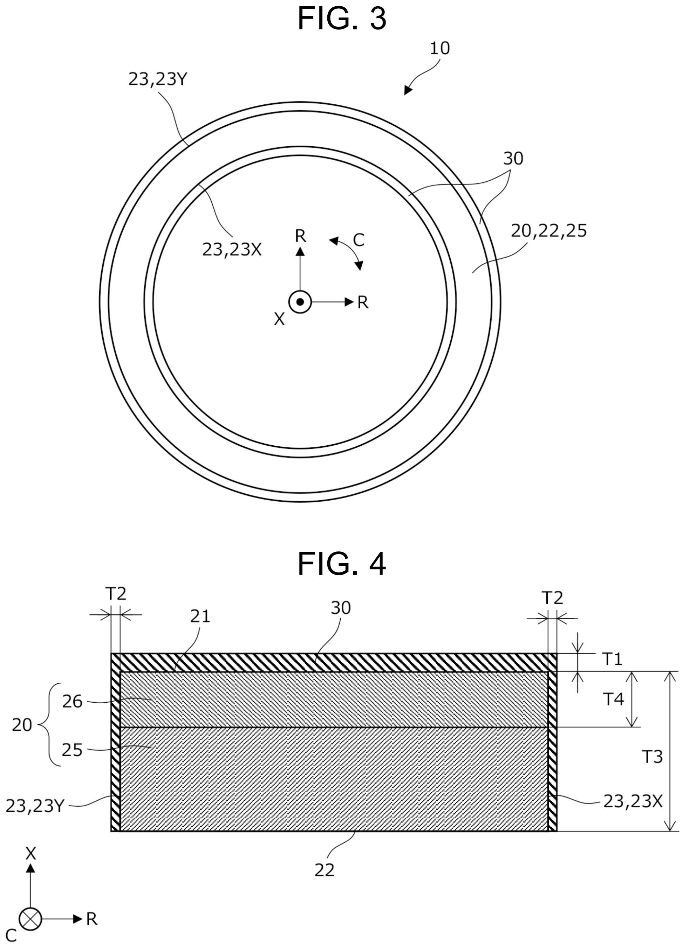

Fig. 2 shows a front view of one of the thrust bearings 10 as observed from a direction faced by the thrust surface 6A of the rotating shaft 6. Fig. 3 shows a front view of the thrust bearing 10 as observed from the direction opposite to the direction faced by the thrust surface 6A of the rotating shaft 6. As shown in Fig. 2 and Fig. 3, the thrust bearing 10 has a roughly annular shape. The rotating shaft 6 passes through the inside diameter side of the annular shape of the thrust bearing 10. The axial direction of the annular shape of the thrust bearing 10 coincides with the axial direction X of the rotating shaft 6. The surface of the annular shape of the thrust bearing 10 shown in Fig. 2 serves as a sliding surface that receives force from the thrust surface 6A of the rotating shaft 6. The gap between the sliding surface of the thrust bearing 10 and the rotating shaft 6 is filled with unillustrated lubricant.

Fig. 4 shows a cross-sectional view of the thrust bearing 10 taken along line A-A in Fig. 2. As shown in Fig. 2 to Fig. 4, the thrust bearing 10 includes a metal base 20 and an insulating layer 30.

The metal base 20 is a main body portion of the thrust bearing 10. As shown in Fig. 2 and Fig. 3, the metal base 20 has an annular shape. The axial direction of the annular shape coincides with the axial direction X of the rotating shaft 6. The metal base 20 includes a first axial-directional end surface 21, a second axial-directional end surface 22, and two radial-directional end surfaces 23. The first axial-directional end surface 21 and the second axial-directional end surface 22 spread perpendicularly to the axial direction X. The first axial-directional end surface 21 is closer to the thrust surface 6A of the rotating shaft 6 than the second axial-directional end surface 22 is. The first axial-directional end surface 21 receives force acting on the metal base 20 in the axial direction X of the rotating shaft 6. As shown in Fig. 2 and Fig. 3, the two radial-directional end surfaces 23 are constituted by an inner circumferential surface 23X and an outer circumferential surface 23Y of the annular shape. The two radial-directional end surfaces 23 spread in the direction orthogonal to a radial direction R. The radial direction R denotes the direction spreading radially from the axial direction X.

The dimension of the annular shape of the metal base 20 along the radial direction R, i.e., the span of the metal base 20, may be constant over the whole of the metal base 20. A thickness T3 of the metal base 20 shown in Fig. 4 may be constant over the whole of the annular shape of the metal base 20 in a circumferential direction C. The circumferential direction C denotes the direction along the extending direction of annular shape and the direction circling around the axial direction of the annular shape. The thickness T3 of the metal base 20 may be 0.8 mm or more, and may be 3 mm or less. The thickness of the metal base 20 denotes the dimension of the metal base 20 along the direction of a line normal to the first axial-directional end surface 21 and the second axial-directional end surface 22, and coincides with the dimension, along the axial direction, of the metal base 20 having the annular shape.

As shown in Fig. 4, the metal base 20 is constituted by a back metal layer 25 and a bearing alloy layer 26. The back metal layer 25 and the bearing alloy layer 26 each have an annular shape. The bearing alloy layer 26 is positioned closer to the first axial-directional end surface 21 than the back metal layer 25 is. The back metal layer 25 is positioned closer to the second axial-directional end surface 22 than the bearing alloy layer 26 is. In the example shown in the drawing, the bearing alloy layer 26 forms the first axial-directional end surface 21, whereas the back metal layer 25 forms the second axial-directional end surface 22. One of the surfaces of the back metal layer 25 positioned closer to the first axial-directional end surface 21 and one of the surfaces of the bearing alloy layer 26 positioned closer to the second axial-directional end surface 22 are joined with each other.

The back metal layer 25 supports the bearing alloy layer 26. The back metal layer 25 has a high strength and is not easily deformed. The back metal layer 25 allows the entire metal base 20 to be thinned, while maintaining strength. The thickness of the back metal layer 25 may be constant over the whole in the circumferential direction. The thickness of the back metal layer 25 may be 0.5 mm or more, and may be 2.8 mm or less. The back metal layer 25 may be hypoeutectoid steel or stainless steel that contains 0.05 mass% or more and 0.5 mass% or less carbon.

The bearing alloy layer 26 has functions that need to be exerted as a bearing that supports the thrust surface 6A of the rotating shaft 6, as exemplified by pressure resistance, abrasion resistance, heat resistance, high heat conductivity, and low friction. The thickness of the bearing alloy layer 26 may be constant over the whole in the circumferential direction. A thickness T4 of the bearing alloy layer 26 may be 0.1 mm or more, and may be 0.5 mm or less. The bearing alloy layer 26 may be an aluminum alloy or a copper alloy.

Without being limited to the illustrated example, the thickness T3 of the metal base 20 and the thickness T4 of the bearing alloy layer 26 do not need to be constant in the circumferential direction. The thickness T3 of the metal base 20 and the thickness T4 of the bearing alloy layer 26 may vary.

The insulating layer 30 protects the metal base 20 so as to prevent an unintended electric current from flowing through the metal base 20. The insulating layer 30 has an insulation property. The insulation property means that a resistance value is 10⁵ Ω or more when measured by using a commercially available insulation resistance meter (for example, MODEL 6018 manufactured by KYORITSU ELECTRICAL INSTRUMENTS WORKS, LTD.) in the state where a line terminal is connected to the surface of the insulating layer 30 covering the first axial-directional end surface 21 of the metal base 20 and an earth terminal is connected to the second axial-directional end surface 22 of the metal base 20, in an environment in which the temperature is 5°C to 30°C and the relative humidity is 45% to 75%. As shown in Fig. 2 to Fig. 4, the insulating layer 30 covers at least the entirety of the first axial-directional end surface 21 and the entirety of the two radial-directional end surfaces 23 of the metal base 20. The insulating layer 30 covering the first axial-directional end surface 21 of the metal base 20 serves as the sliding surface of the thrust bearing 10. Without being limited to the illustrated example, the insulating layer 30 may cover at least a part of the second axial-directional end surface 22 of the metal base 20. When the insulating layer 30 does not cover at least a part of the second axial-directional end surface 22 of the metal base 20, the thrust bearings 10 are more easily held by the bearing holding holes 3 in the bearing holding holes 3 of the case 2, due to friction between the metal base 20 and the inner surface of the case 2.

The insulating layer 30 is in the form of a thin film. The thickness of the insulating layer 30 covering the radial-directional end surfaces 23 is thinner than the thickness of the insulating layer 30 covering the first axial-directional end surface 21 of the metal base 20. More specifically, a maximum thickness of the insulating layer 30 covering the radial-directional end surfaces 23 of the metal base 20 is larger than 0% and is equal to or smaller than 50% of a minimum thickness of the insulating layer 30 covering the first axial-directional end surface 21, may preferably be equal to or smaller than 30%, and may more preferably be equal to or smaller than 5%. A thickness T1 of the insulating layer 30 covering the first axial-directional end surface 21 of the metal base 20 may be constant over the whole in the circumferential direction C. The thickness T1 of the insulating layer 30 covering the first axial-directional end surface 21 of the metal base 20 may be 5 µm or more, and may be 50 µm or less. The thickness T1 of the insulating layer 30 covering the first axial-directional end surface 21 is the dimension of the insulating layer 30 covering the first axial-directional end surface 21 along the direction of a line normal to the first axial-directional end surface 21, and coincides with the dimension of the insulating layer 30 covering the first axial-directional end surface 21 along the axial direction X. A thickness T2 of the insulating layer 30 covering the radial-directional end surfaces 23 of the metal base 20 may be constant over the whole in the circumferential direction C. The thickness T2 of the insulating layer 30 covering the radial-directional end surfaces 23 of the metal base 20 may be 2.5 µm or more, and may be 25 µm or less. The thickness T2 of the insulating layer 30 covering the radial-directional end surfaces 23 is the dimension of the insulating layer 30 covering the radial-directional end surfaces 23 along the direction of a line normal to the radial-directional end surfaces 23 and is the dimension of the insulating layer 30 covering the radial-directional end surfaces 23 along the radial direction R. Due to a manufacture error or the like at the time of forming the insulating layer 30, a variation of 30% or less is tolerated for the thickness of the insulating layer 30.

A material of the insulating layer 30 may be a resin. The material of the insulating layer 30 may contain one or more of polyether ether ketone (PEEK), polyether ketone (PEK), polytetrafluoroethylene (PTFE), polyimide (PI), polyamide imide (PAI), polyamide (PA), and epoxy (EP). The insulating layer 30 may contain one or more of a solid lubricant, a reinforced fiber for increasing the strength, a filler, and a colorant. Examples of the solid lubricant include graphite, molybdenum sulfide (MoS₂), tungsten sulfide (WS₂), and hexagonal boron nitride (h-BN). Examples of the reinforced fiber include carbon fiber and metal compound fiber. Examples of the filler include calcium fluoride (CaF₂), calcium carbonate (CaCO₃), barium sulfate, iron oxides, calcium phosphate, and tin oxide (SnO₂).

A method for disposing the thrust bearing 10 in the bearing holding hole 3 of the case 2 will be described. The thrust bearing 10 is inserted into the bearing holding hole 3 of the case 2. The bearing holding hole 3 is slightly larger than the length of the outer circumference of the thrust bearing. By using a dowel pin or a stop pin extending toward the thrust bearing 10 in the radial direction (not illustrated), the position of the thrust bearing 10 is determined and fixed inside the bearing holding hole 3.

The rotating shaft 6 is inserted into the inside of the annular shape of the thrust bearing 10 disposed in the bearing holding hole 3 of the case 2. The surface of the insulating layer 30 covering the first axial-directional end surface 21 perpendicular to the axial direction X of the thrust bearing 10 comes into contact with the thrust surface 6A of the rotating shaft 6. The thrust bearing 10 supports the rotating shaft 6 in an appropriate position in the axial direction X.

The motor 1 includes two thrust bearings 10 in the example shown in Fig. 1, but may include any number of thrust bearings 10, without being limited to the illustrated example. The case 2 is provided with the bearing holding holes 3 in a quantity corresponding to the quantity of the thrust bearings 10 included in the motor 1. The radial bearings 9 and the thrust bearings 10 may be formed integrally.

As described above, as for the motor that is used for the driving of a vehicle, it is desirable to enhance efficiency by increasing the frequency of the electric power source. However, when the frequency of the electric power source is increased, the rotating shaft is easily charged with electricity. As a result, a large electric potential difference may occur between the rotating shaft and the thrust bearing. When this electric potential difference exceeds a breakdown voltage of the lubricant supplied between the rotating shaft and the thrust bearing, a discharge from the rotating shaft to the thrust bearing occurs. The discharge may cause damage, such as melting of the rotating shaft or the sliding surface of the thrust bearing or the like. The damage of the rotating shaft or the sliding surface of the thrust bearing makes it difficult for the thrust bearing to support the rotating shaft in an appropriate position.

To avoid the damage of the sliding surface of the thrust bearing caused by the discharge, one idea is to cover the first axial-directional end surface of the metal base with an insulating layer. The insulating layer serves as the sliding surface of the thrust bearing. However, when only the first axial-directional end surface of the metal base was covered with the insulating layer, a discharge might frequently occur from the rotating shaft toward the radial-directional end surfaces of the metal base. This discharge would increase the temperature of the thrust bearing. As a result of the temperature increase of the thrust bearing, damage might occur, such as melting of the insulating layer serving as the sliding surface may occur due to the heat.

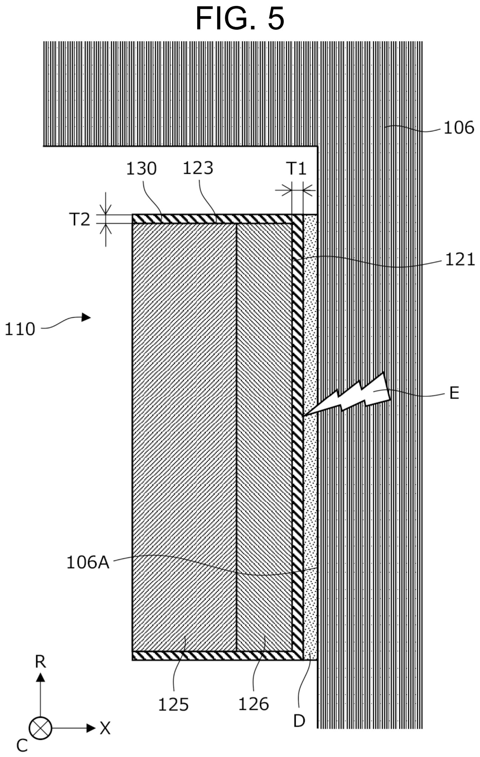

To avoid the discharge toward the radial-directional end surfaces of the metal base as well, one idea is to also cover the radial-directional end surfaces of the metal base with an insulating layer. As a comparative example, Fig. 5 shows a thrust bearing 110 in which a first axial-directional end surface 121 and radial-directional end surfaces 123 of a metal base 120 are covered with an insulating layer 130. To avoid the discharge toward both the first axial-directional end surface 121 and the radial-directional end surfaces 123 of the metal base 120, the thickness T2 of the insulating layer 130 covering the radial-directional end surfaces 123 of the metal base 120 is substantially equal to the thickness T1 of the insulating layer 130 covering the first axial-directional end surface 121 of the metal base 120. In the thrust bearing 110 configured in this manner, a breakdown voltage of the insulating layer 130 covering the first axial-directional end surface 121 of the metal base 120 is substantially equal to a breakdown voltage of the insulating layer 130 covering the radial-directional end surfaces 123 of the metal base 120. When an electric potential difference occurs between a rotating shaft 106 and the thrust bearing 110, a discharge E may easily occur from the rotating shaft 106 toward the first axial-directional end surface 121 positioned close to the rotating shaft 106. The insulating layer 130 covering the first axial-directional end surface 121 serving as the sliding surface may easily be damaged.

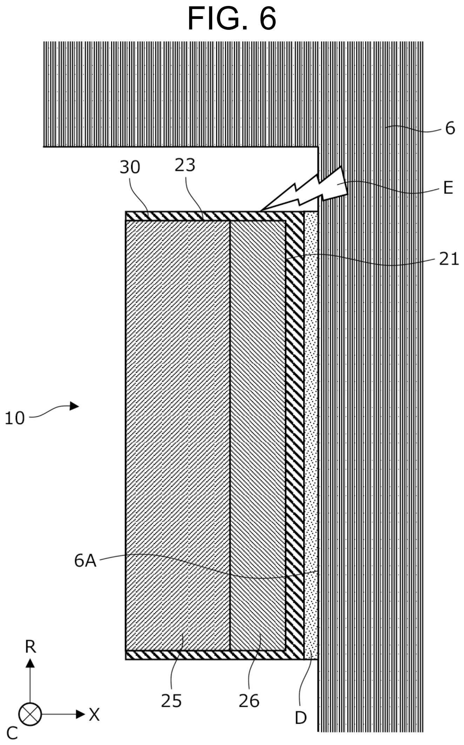

In the thrust bearing 10 of the present embodiment, the maximum thickness T2 of the insulating layer 30 covering the radial-directional end surfaces 23 of the metal base 20 is equal to or smaller than 50% of the minimum thickness T1 of the insulating layer 30 covering the first axial-directional end surface 21 of the metal base 20. In the thrust bearing 10 configured in this manner, a breakdown voltage of the insulating layer 30 covering the radial-directional end surfaces 23 is lower than a breakdown voltage of the insulating layer 30 covering the first axial-directional end surface 21. As shown in Fig. 6, when an electric potential difference occurs between the rotating shaft 6 and the thrust bearing 10, a discharge E may easily occur from the rotating shaft 6 toward the radial-directional end surfaces 23 having the lower breakdown voltage. A discharge does not easily occur toward the first axial-directional end surface 21 of the metal base 20. The insulating layer 30 covering the first axial-directional end surface 21 serving as the sliding surface is not easily damaged by a discharge.

Even when the insulating layer 30 covering the radial-directional end surfaces 23 is damaged by the discharge E, there is no impact on the insulating layer 30 covering the first axial-directional end surface 21 serving as the sliding surface. Because the radial-directional end surfaces 23 are covered with the insulating layer 30, the discharge from the rotating shaft 6 toward the radial-directional end surfaces 23 of the metal base 20 does not occur so frequently as to increase the temperature of the thrust bearing 10.

To the thrust bearing 10 in the above-described embodiment, various alternations may be applied. A number of modifications of the thrust bearing 10 will be explained. In each modification described below, descriptions in common with the above-described embodiment are occasionally omitted.

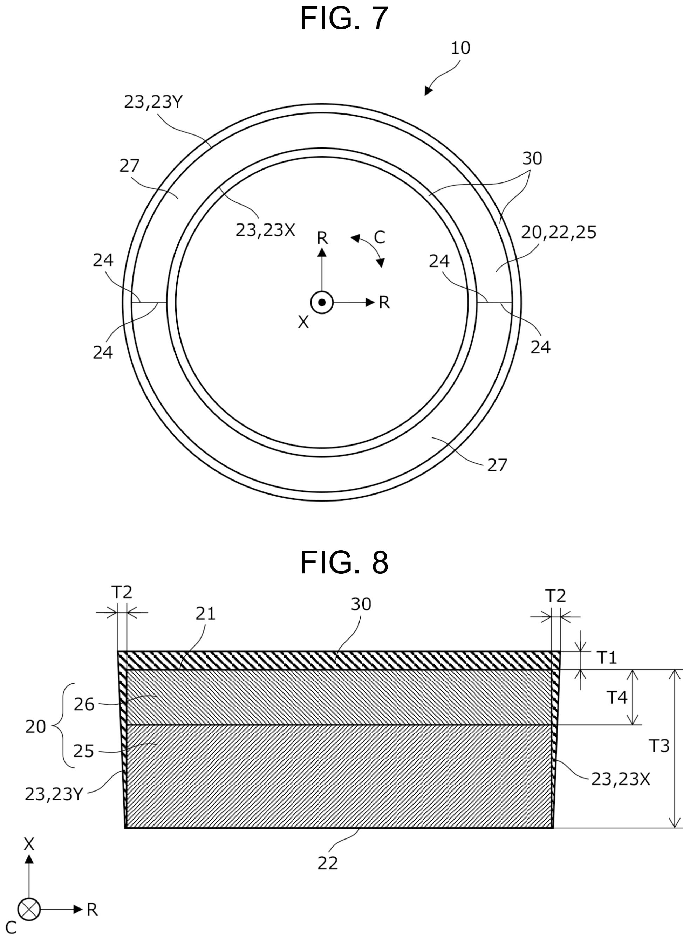

In the embodiment described above, the thrust bearing 10 has an annular shape. Without being limited to the above-described embodiment, the metal base 20 may include two partial metal bases 27 each of which has a semi-annular shape, as shown in the modification in Fig. 7. Fig. 7 shows the thrust bearing 10 according to the modification, as observed from the direction opposite to the direction faced by the thrust surface 6A of the rotating shaft 6 similarly to Fig. 3. As shown in the drawing, when respective circumferential-directional end surfaces 24 of the two partial metal bases 27 each of which has a semi-annular shape are coupled, the metal base 20 forms an annular shape. By the two partial metal bases 27 each of which has the semi-annular shape, the first axial-directional end surface 21, the second axial-directional end surface 22, and the two radial-directional end surfaces 23 of the metal base 20 are formed.

The thickness of the partial metal bases 27 may be constant over the whole in the circumferential direction C. The thickness of the partial metal bases 27 may be 0.8 mm or more, and may be 3 mm or less. The thickness of each of the partial metal bases 27 does not need to be constant in the circumferential direction C.

In the thrust bearing 10 in the above-described embodiment, the thickness T2 of the insulating layer 30 covering the radial-directional end surfaces 23 of the metal base 20 is constant over the whole in the circumferential direction C. As shown in the modification in Fig. 8, the thickness T2 of the insulating layer 30 covering the radial-directional end surfaces 23 of the metal base 20 does not need to be constant in the axial direction X. More specifically, the thickness T2 of the insulating layer 30 covering at least one of the two radial-directional end surfaces 23 of the metal base 20 may decrease from the first axial-directional end surface 21 toward the second axial-directional end surface 22 of the metal base 20, on a cross-section orthogonal to the circumferential direction C. In this modification also, a maximum thickness of the insulating layer 30 covering the radial-directional end surfaces 23 of the metal base 20 is larger than 0% and is equal to or smaller than 50% of a minimum thickness of the insulating layer 30 covering the first axial-directional end surface 21, may preferably be equal to or smaller than 30%, and may more preferably be equal to or smaller than 5%.

In the thrust bearing 10 according to the present modification, a breakage voltage of the insulating layer 30 covering at least one of the two radial-directional end surfaces 23 of the metal base 20 is at a maximum in the vicinity of the first axial-directional end surface 21 and decreases toward at least one of the two second axial-directional end surface 22. The discharge from the rotating shaft 6 toward at least one of the two radial-directional end surfaces 23 of the metal base 20 occurs more easily in positions on the radial-directional end surfaces 23 that are closer to the second axial-directional end surface 22 than to the first axial-directional end surface 21. Even when, due to the discharge, the temperature is increased in the positions closer to the second axial-directional end surface 22 of the metal base 20, the temperature of the first axial-directional end surface 21 of the metal base 20 does not easily increase. The insulating layer 30 covering the first axial-directional end surface 21 of the metal base 20 serving as the sliding surface is not easily damaged, such as being melted by the heat. The insulating layer 30 covering the first axial-directional end surface 21 serving as the sliding surface is less easily damaged by the discharge.

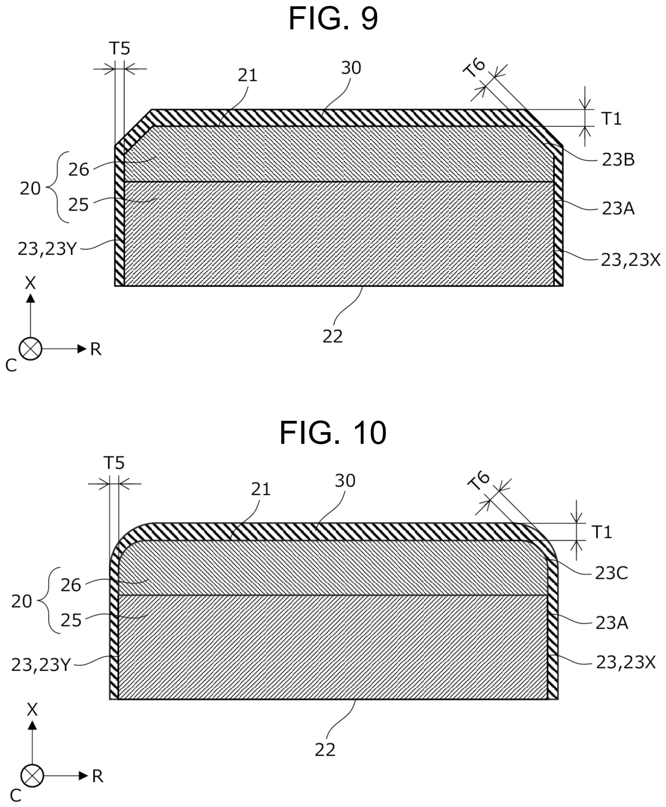

In the thrust bearing 10 in the above-described embodiment, the radial-directional end surfaces 23 spread in the direction orthogonal to the radial direction R. As shown in the modification in Fig. 9, at least one of the two radial-directional end surfaces 23 may include an inclined surface 23B that is inclined with respect to the radial direction R of the annular shape. The inclined surface 23B is a flat surface. In the example shown in Fig. 9, the radial-directional end surfaces 23 include an orthogonal surface 23A that spreads in the direction orthogonal to the radial direction R and the inclined surface 23B that is inclined with respect to the radial direction R. The surface that is inclined with respect to the radial direction R means that the angle between the direction in which the surface spreads and the radial direction R is more than 0° and less than 90°. The angle between the direction in which the inclined surface 23B spreads and the radial direction R may be 30° or more, and may be 75° or less.

Without being limited to the modification shown in Fig. 9, the radial-directional end surfaces 23 may include, as shown in the modification in Fig. 10, a curved surface 23C that curves with respect to the radial direction R of the annular shape. The curved surface 23C is a bent surface. In the example shown in Fig. 10, the radial-directional end surfaces 23 include the orthogonal surface 23A that spreads in the direction orthogonal to the radial direction R and the curved surface 23C that curves with respect to the radial direction R. The surface that curves with respect to the radial direction R means that, in various positions on the surface, the angle formed with respect to the radial direction R continuously changes. In various positions on the curved surface 23C, the angle formed with respect to the radial direction R is larger than 0° and smaller than 90°, and may be 30° or more, and may be 75° or less. In various positions on the curved surface 23C, the angle formed with respect to the radial direction R may continuously increase.

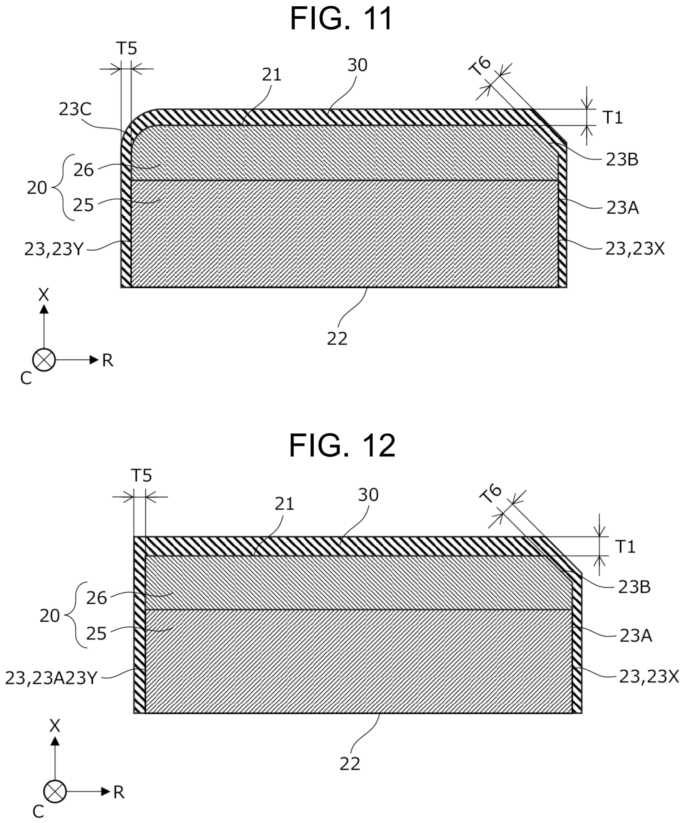

As shown in Fig. 11, the modification shown in Fig. 9 may be combined with the modification shown in Fig. 10. In the example shown in Fig. 11, the inner circumferential surface 23X being one of the radial-directional end surfaces 23 includes the orthogonal surface 23A that spreads in the direction orthogonal to the radial direction R and the inclined surface 23B that is inclined with respect to the radial direction R. The outer circumferential surface 23Y being the other radial-directional end surface 23 includes the orthogonal surface 23A that spreads in the direction orthogonal to the radial direction R and the curved surface 23C that curves with respect to the radial direction R. Without being limited to the illustrated example, the inner circumferential surface 23X may include the orthogonal surface 23A and the curved surface 23C, whereas the outer circumferential surface 23Y may include the orthogonal surface 23A and the inclined surface 23B.

As shown in Fig. 12, only one of the radial-directional end surfaces 23 may include the orthogonal surface 23A and the inclined surface 23B, while the other radial-directional end surface 23 may be constituted only by the orthogonal surface 23A. In the example shown in the drawing, the inner circumferential surface 23X includes the orthogonal surface 23A and the inclined surface 23B, whereas the outer circumferential surface 23Y is constituted only by the orthogonal surface 23A. Without being limited to the illustrated example, the inner circumferential surface 23X may be constituted only by the orthogonal surface 23A, while the outer circumferential surface 23Y may include the orthogonal surface 23A and the inclined surface 23B. The inner circumferential surface 23X may include the orthogonal surface 23A and the curved surface 23C, while the outer circumferential surface 23Y may be constituted only by the orthogonal surface 23A. The inner circumferential surface 23X may be constituted only by the orthogonal surface 23A, while the outer circumferential surface 23Y may include the orthogonal surface 23A and the curved surface 23C.

The inclined surface 23B or the curved surface 23C is connected to the orthogonal surface 23A. The inclined surface 23B or the curved surface 23C is positioned closer to the first axial-directional end surface 21 than the orthogonal surface 23A is. The inclined surface 23B or the curved surface 23C is connected to the first axial-directional end surface 21. The orthogonal surface 23A is connected to the second axial-directional end surface 22. The inclined surface 23B or the curved surface 23C is a chamfered surface of the radial-directional end surface 23 with respect to the first axial-directional end surface 21.

The thickness T2 of the insulating layer 30 covering the radial-directional end surfaces 23 includes a thickness T5 of the insulating layer 30 covering the orthogonal surface 23A and a thickness T6 of the insulating layer 30 covering the inclined surface 23B or the curved surface 23C. In the present modification, the thickness T5 of the insulating layer 30 covering the orthogonal surface 23A is the dimension of the insulating layer 30 covering the radial-directional end surface 23 along the axial direction X. The thickness T6 of the insulating layer 30 covering the inclined surface 23B or the curved surface 23C is the dimension along the normal line direction at various positions of the inclined surface 23B or the curved surface 23C. A maximum thickness of the insulating layer 30 covering the orthogonal surface 23A or a maximum thickness of the insulating layer 30 covering the inclined surface 23B or the curved surface 23C is larger than 0% and is equal to or smaller than 50% of a minimum thickness of the insulating layer 30 covering the first axial-directional end surface 21, may preferably be equal to or smaller than 30%, and may more preferably be equal to or smaller than 5%.

In the thrust bearing 10 according to the modifications shown in Fig. 9 to Fig. 12, the surface of the insulating layer 30 covering the inclined surface 23B or the curved surface 23C is also a surface that is inclined or curved with respect to the axial direction X. The inclined surface 23B or the curved surface 23C makes it possible to easily insert the rotating shaft 6 into the inside of the annular shape of the thrust bearing 10, when the rotating shaft 6 is caused to pass through the inside of the annular shape of the thrust bearing 10. As another example, it is possible to prevent interference with a fillet portion of the rotating shaft 6.

Without being limited to the examples illustrated in Fig. 9 to Fig. 12, at the radial-directional end surfaces 23, another inclined surface or curved surface may be connected to the second axial-directional end surface 22. The inclined surface or the curved surface may be a chamfered surface of the radial-directional end surface 23 with respect to the second axial-directional end surface 22. The radial-directional end surfaces 23 may include both the inclined surface 23B or the curved surface 23C connected to the first axial-directional end surface 21 and the inclined surface or the curved surface connected to the second axial-directional end surface 22.

Aspects in the present disclosure are not limited to the above-described embodiment and modifications, and include various modifications that can be conceived by a person skilled in the art. In addition, effects of the present disclosure are not limited to the above-described contents and the contents about the modifications. Various additions, alterations and partial removals can be performed without departing from conceptual ideas and spirits of the present disclosure that are derived from the contents specified in the claims and equivalents thereto. For example, a plurality of modifications can be combined in a range in which conceptual ideas and spirits do not interfere between the modifications.

## Claims

1. A thrust bearing (10) for receiving force acting in an axial direction (X) of a rotating shaft (6) of a vehicle driving motor, the thrust bearing (10) comprising:
a metal base (20) having an annular shape and including a first axial-directional end surface (21), a second axial-directional end surface (22), and two radial-directional end surfaces (23); and
an insulating layer (30) covering at least the first axial-directional end surface (21) and the two radial-directional end surfaces (23) of the metal base (20), wherein
the metal base (20) is constituted by a back metal layer (25) and a bearing alloy layer (26) positioned closer to the first axial-directional end surface (21) than the back metal layer (25) is, and
a maximum thickness of the insulating layer (30) covering the radial-directional end surfaces (23) of the metal base (20) is larger than 0% and is equal to or smaller than 50% of a minimum thickness of the insulating layer (30) covering the first axial-directional end surface (21) of the metal base (20).

2. The thrust bearing (10) according to claim 1, wherein the metal base (20) includes two partial metal bases (27) each having a semi-annular shape.

3. The thrust bearing (10) according to claim 1 or 2, wherein a thickness of the insulating layer (30) covering at least one of the two radial-directional end surfaces (23) of the metal base (20) decreases from the first axial-directional end surface (21) toward the second axial-directional end surface (22) of the metal base (20).

4. The thrust bearing (10) according to any one of claims 1 to 3, wherein
at least one of the two radial-directional end surfaces (23) include an inclined surface (23B) that is inclined with respect to a radial direction (R) of the annular shape or a curved surface (23C) that curves with respect to the radial direction (R) of the annular shape, and
the inclined surface (23B) or the curved surface (23C) of the radial-directional end surfaces (23) is connected to the first axial-directional end surface (21).
